Europäisches Patentamt

European Patent Office

Office européen des brevets

(19)

(11) Veröffentlichungsnummer: **0 083 769**

**A2**

(12) **EUROPÄISCHE PATENTANMELDUNG**

(21) Anmeldenummer: **82111727.2**

(22) Anmeldetag: **17.12.82**

(51) Int. Cl.³: **B 60 R 1/02**

(30) Priorität: **07.01.82 DE 3200294**

(43) Veröffentlichungstag der Anmeldung:
**20.07.83 Patentblatt 83/29**

(84) Benannte Vertragsstaaten:
**AT BE CH DE FR GB IT LI LU NL SE**

(71) Anmelder: **Gelmke, August-Wilhelm**
**Ledebourstrasse 29**
**D-2840 Diepholz(DE)**

(71) Anmelder: **Hofmann, Dieter**
**Nachtigallenweg 11**
**D-2845 Damme(DE)**

(72) Erfinder: **Gelmke, August-Wilhelm**
**Ledebourstrasse 29**
**D-2840 Diepholz(DE)**

(72) Erfinder: **Hofmann, Dieter**
**Nachtigallenweg 11**
**D-2845 Damme(DE)**

(54) **Kraftfahrzeugrückblickeinrichtung.**

(57) Kraftfahrzeug mit Rückblickeinrichtung, die zur Erreichung eines besseren Überblicks ohne tote Winkel nach rückwärts, ohne daß der Blick des Fahrers von der Fahrbahn zu sehr abgelenkt wird, derart ausgestaltet ist, daß die Rückblickeinrichtung aus einem Lichtleiterbündel, einem an dessen einem Ende angebrachten Aufnahmeobjektiv und an dessen anderem Ende abgeordneten Wiedergabeobjektiv mit einer Mattscheibe besteht, daß das Aufnahmeobjektiv hinsichtlich seiner optischen Achse nach hinten und/oder zur Seite gerichtet an dem Fahrzeug angebracht ist und daß die Mattscheibe des Wiedergabeobjectivs am Armaturenbrett des Kraftfahrzeugs für den Fahrer gut einsehbar angebracht ist.

FIG. 1

Dieter HOFMANN        - 7 -
August Wilhelm GELMKE

Kraftfahrzeuge mit Rückblickeinrichtungen sind in einer
Vielzahl von Ausführungsformen bekannt.

Existierende Rückblickvorrichtungen sind in aller Regel
als Spiegel ausgebildet. Sie haben den Nachteil, daß sie
je nach Lokalisierung den Blick des Fahrers in verschiedener Weise von der Fahrbahn ablenken. Darüber hinaus gestatten sie nur eine begrenzte Übersehbarkeit, so daß immer sogenannte tote Winkel vorhanden sind. Infolgedessen
sind auch schon mehrere Rückspiegel an Kraftfahrzeugen
vorgesehen worden. Alle außen liegenden Rückspiegel bekannter Art sind strömungsungünstig, insbesondere bei höheren Geschwindigkeiten. Außerdem erzeugen sie störende
Luftgeräusche, insbesondere bei höheren Geschwindigkeiten.
Schließlich bieten Außenspiegel Angriffspunkte für Zerstörungen, z.B. in automatischen Waschanlagen und sie sind
direktes Ziel von Vandalismus.

Der Erfindung liegt die Aufgabe zugrunde, eine gattungsgemäße Rückblickeinrichtung für Kraftfahrzeuge zu schaffen,
die einerseits den Blick des Fahrers von der Fahrbahn nicht
zu sehr ablenkt, andererseits einen besseren Überblick ohne
tote Winkel nach rückwärts zuläßt.

Diese Aufgabe wird erfindungsgemäß durch den Gegenstand
des Anspruchs 1 gelöst.

Die erfindungsgemäße Rückblickeinrichtung besteht also
im wesentlichen aus einem Lichtleiterbündel, vorzugsweise

DIETER HOFMANN
AUGUST WILHELM GELMKE

- 7 -

ein Glasfaserbündel und je einem an dessen Ende angebrachten Objektiv. Das Aufnahmeobjektiv ist im rückwärtigen Teil des Kraftfahrzeugs so montiert, daß die gesamte Fahrbahnbreite überschaut werden kann. Je nach Anbringung und Ausgestaltung des Aufnahmeobjektives - beispielsweise im Seitenbereich des Fahrzeugs bzw. seitlich von der Mitte versetzt oder auch an entsprechend exponierter Stelle, beispielsweise mittig im rückwärtigen Dachbereich - lassen sich dabei sogenannte tote Winkel vermeiden, die sich bei herkömmlichen Rückblickeinrichtungen rechts und links neben dem Fahrzeug ergeben können. Auch läßt sich die Ausrichtung der optischen Achse des Aufnahmeobjektivs zu diesem Zwecke zwischen der Ausrichtung nach hinten und zur Seite entsprechend einstellen. Die Ausgestaltung des Aufnahmeobjektivs kann angepaßt mehr oder weniger Weitwinkelcharakter aufweisen. Am Armaturenbrett befindet sich ein weiteres Objektiv zur Wiedergabe des durch das Aufnahmeobjektiv aufgenommenen Bildes in Verbindung mit einer Mattscheibe, die im Armaturenbrett im Rahmen der anderen Instrumente montiert sein kann. Gegebenenfalls kann noch ein Lichtverstärker, beispielsweise ein Restlichtverstärker, wie sie in Nachtsichtgeräten eingesetzt werden, zum Einsatz kommen.

Vom Aufnahmeobjektiv wird das Bild auf den Endquerschnitt des Faserbündels projiziert. Durch die Glasfasern wird dieses Bild entlang der gesamten Länge des Bündels übertragen, wo es im einfachsten Fall mit einem Objektiv auf eine Mattscheibe projiziert wird.

Erfindungsgemäß ergibt sich eine nicht unbeträchtliche Erhöhung der Fahrsicherheit. Mit einem einzigen Blick auf die Mattscheibe, die vorzugsweise im Bereich des Armaturenbretts leicht einsehbar angeordnet ist, kann die rückliegende Straße

DIETER HOFMANN
AUGUST WILHELM GELMKE

- 3 -

in ihrer gesamten Breite unter Ausschaltung von toten Winkeln übersehen werden. Wenn darüber hinaus zwei Rückblickeinrichtungen gemäß der Erfindung eingesetzt werden und bei entsprechend angepaßter Ausbildung der beiden Aufnahmeobjektive und entsprechend naher Anordnung der beiden Mattscheiben nebeneinander, kann die gesamte Fahrbahn ohne jedweden toten Bereich übersehen werden, und zwar mit einem Blick im Gegensatz zu bekannten gattungsgemäßen Rückblickeinrichtungen, wozu einmal in den linken Außenspiegel und einmal in den rechten geschaut werden muß. Es lassen sich natürlich auch mehr als zwei solcher Einrichtungen nebeneinander oder wahlweise einschaltbar verwenden. Bei Anordnung des Aufnahmeobjektives bzw. einer der Aufnahmeobjektive ergibt sich darüber hinaus die Möglichkeit, das Heck des Fahrzeuges in den Aufnahmebereich mit einzubeziehen. Dadurch erhält man einen guten Überblick, insbesondere auch für das Rückwärtsfahren, beispielsweise im Zuge eines Einparkvorganges.

In bevorzugter Ausführung wird zu letzterem Zweck wenigstens ein Aufnahmeobjektiv relativ hoch am Fahrzeug befestigt, so daß ein mit herkömmlichen Einrichtungen nicht einsehbares Fahrzeugende klar überschaut werden kann.

Grundsätzlich und im Sinne einer leichten Nachrüstbarkeit lassen sich ein oder mehrere Aufnahmeobjektive auch im Innenraum des Fahrzeuges anordnen, und zwar bevorzugt im Nahbereich der rückwärtigen Scheibe, durch welche hindurch die Beobachtung erfolgt. Auch hier läßt sich das Aufnahmeobjektiv nahe dem Dachbereich anordnen, um den Überblick über die Straße und insbesondere über das Fahrzeugheck zu verbessern. Auf diese Weise können auch stufenlose Heckausbildungen gut beobachtet werden.

DIETER HOFMANN                    - 4 -
AUGUST WILHELM GELMKE


Ferner entfällt ein Nachstellen der Rückblickanlage. Ein
Verstellen, zumindest unbeabsichtigt, ist nicht möglich.
Soweit Aufnahmeobjektive nicht in den Seitenbereichen des
Fahrzeuges vorstehend angeordnet werden, entfallen strömungsungünstige Außenteile mit allen hieraus resultierenden Nachteilen, insbesondere können keine Teile beispielsweise in Waschanlagen beschädigt werden. Schließlich ist
die erfindungsgemäße Vorrichtung wartungsfrei.

Zweckmäßige Ausgestaltungen und Weiterbildungen der Erfindung sind in den Unteransprüchen gekennzeichnet.


Ein Ausführungsbeispiel der Erfindung wird nachfolgend anhand der Zeichnung näher erläutert.


Es zeigt:

Fig. 1          den hinteren Bereich eines Kraftfahrzeugs,
                in perspektivischer Darstellung;

Fig. 2          eine Draufsicht auf ein Armaturenbrett
                des Kraftfahrzeugs und

Fig. 3          die erfindungsgemäße Rückblickeinrichtung,
                in schematischer Darstellung.

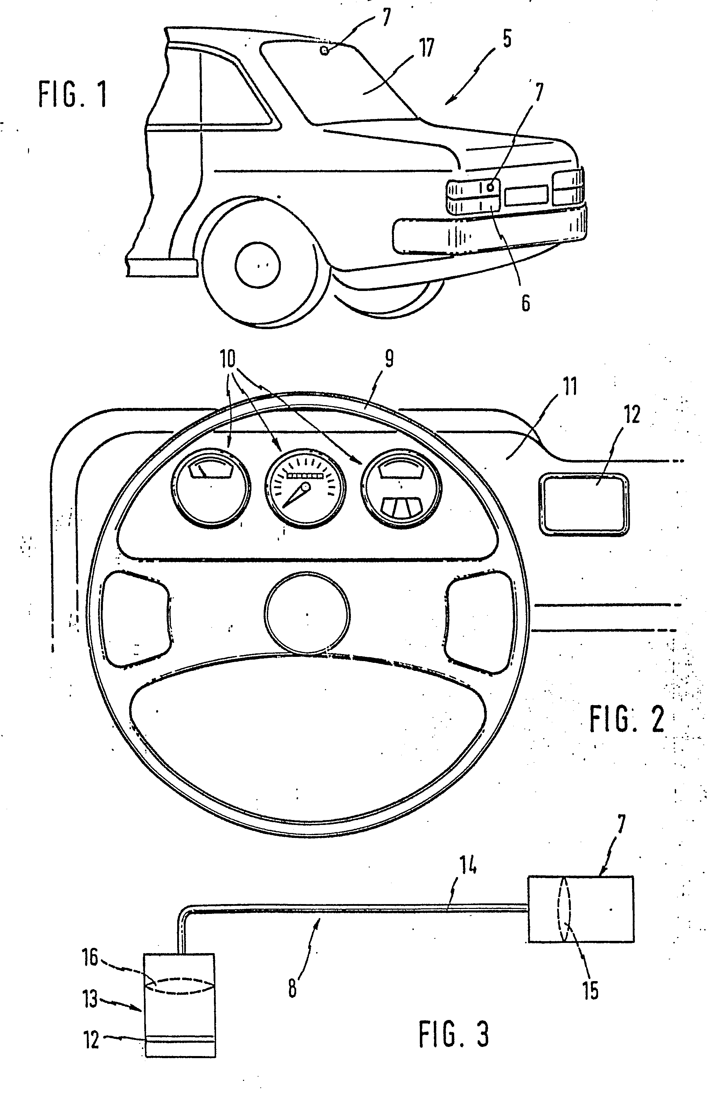

Das insgesamt mit 5 in Fig. 1 bezeichnete Kraftfahrzeug ist
mit seinem hinteren Bereich dargestellt. Es weist u.a. Fahrzeugrücklichter 6 auf, in die das Aufnahmeobjektiv 7 der
insgesamt mit 8 (Fig. 3) bezeichneten Rückblickeinrichtung
eingebaut ist.

DIETER HOFMANN        - 6 -
AUGUST WILHELM GELMKE


Fig. 2 zeigt eine Draufsicht auf das Armaturenbrett eines
Kraftfahrzeugs. Neben dem Lenkrad 9 und üblichen Instrumenten 10 am insgesamt mit 11 bezeichneten Armaturenbrett
kann in diesem Blickbereich, gut einsehbar durch den Fahrer, die Mattscheibe 12 des insgesamt mit 13 bezeichneten
Wiedergabeobjekt angeordnet sein.

In Fig. 3 ist die Rückblickeinrichtung 8 näher dargestellt.
Ein Glasfaserbündel 14, wie es an sich bekannt ist, verbindet das Aufnahmeobjektiv 7 mit dem Wiedergabeobjektiv 13, welches die Mattscheibe 12 aufweist. Sowohl das Aufnahmeobjektiv 7 als auch das Wiedergabeobjektiv 13 weisen
zumindest eine Sammellinse 15 bzw. 16 auf, die vorzugsweise als Weitwinkelobjektiv (Fischaugenobjektiv) wirkt.

In Fig. 1 ist eine weitere beispielhafte Möglichkeit der
Anordnung eines Aufnahmeobjektivs (7 dargestellt, und
zwar im Innenraum des Fahrzeuges 5 kurz vor der rückwärtigen Scheibe 17. Das Objektiv ist im oberen mittigen
Randbereich dieser Scheibe 17 angeordnet, so daß der erfaßte Blickwinkel sowohl eine gute Beobachtung der gesamten Straßenbreite als auch der rückwärtigen Abmessung des
Fahrzeuges ermöglicht.

Die geschilderten Möglichkeiten der Anbringung des oder
von mehreren Aufnahmeobjektiven lassen leicht erkennen,
daß je nach Aufwand eine mehr und mehr vollständige Überwachung des rückwärtigen und/oder seitlichen Straßenbereiches möglich ist, gegebenenfalls bei gleichzeitiger
Wiedergabe des rückwärtigen Fahrzeugendes.

DIETER HOFMANN
Nachtigallenweg 11
2845  Damme

AUGUST WILHELM GELMKE
Ledebourstrasse 29
2840  Diepholz

---

## KRAFTFAHRZEUGRÜCKBLICKEINRICHTUNG

---

### A N S P R Ü C H E

1. Kraftfahrzeug mit Rückblickeinrichtung, d a d u r c h
   g e k e n n z e i c h n e t ,
   - daß die Rückblickeinrichtung (8) aus einem Lichtleiterbündel (14), einem an dessen einem Ende angebrachten Aufnahmeobjektiv (7) und an dessen anderem Ende angeordneten Wiedergabeobjektiv (13)
     mit einer Mattscheibe (12) besteht,
   - daß das Aufnahmeobjektiv (7) hinsichtlich seiner
     optischen Achse nach hinten und/oder zur Seite gerichtet an dem Fahrzeug angebracht ist,
   - und daß die Mattscheibe (12) des Wiedergabeobjektivs
     (13) am Armaturenbrett (11) des Kraftfahrzeugs (5)
     für den Fahrer gut einsehbar angebracht ist.

2. Kraftfahrzeug nach Anspruch 1, d a d u r c h   g e -
   k e n n z e i c h n e t , daß das Aufnahmeobjektiv
   (7) im hinteren Bereich des Kraftfahrzeuges (5) angebracht ist.

DIETER HOFMANN       - 2 -

AUGUST WILHELM GELMKE

3. Kraftfahrzeug nach Anspruch 2, d a d u r c h   g e k e n n -
z e i c h n e t , daß das Aufnahmeobjektiv(7) an der Außenseite des Kraftfahrzeuges (5) angebracht ist.

4. Kraftfahrzeug nach Anspruch 2, d a d u r c h   g e k e n n -
z e i c h n e t , daß das Aufnahmeobjektiv (7) im Innenraum des Kraftfahrzeuges vor der rückwärtigen Scheibe (17)
angebracht ist.

5. Kraftfahrzeug nach einem der Ansprüche 1 bis 4, d a -
d u r c h  g e k e n n z e i c h n e t , daß das Aufnahmeobjektiv (7) im oberen Randbereich des Fahrzeugs, insbesondere im oberen Bereich der rückwärtigen Scheibe (17),
angebracht ist.

6. Kraftfahrzeug nach einem der Ansprüche 1 bis 5, d a -
d u r c h   g e k e n n z e i c h n e t , daß das Aufnahmeobjektiv (7) eine Sammellinse (15) aufweist.

7. Kraftfahrzeug nach einem der Ansprüche 1 bis 6, d a -
d u r c h   g e k e n n z e i c h n e t , daß das Aufnahmeobjektiv (7) als Weitwinkelobjektiv ausgebildet ist.

8. Kraftfahrzeug nach einem der Ansprüche 1 bis 7, d a -
d u r c h   g e k e n n z e i c h n e t , daß das
Lichtleiterbündel (14) ein Glasfaserbündel ist.

9. Kraftfahrzeug nach einem der Ansprüche 1 bis 8, d a -
d u r c h   g e k e n n z e i c h n e t , daß das
Aufnahmeobjektiv (7) am Übergang zwischen rückwärtigem und seitlichem Abschluß des Kraftfahrzeugs (5)
angebracht ist.

DIETER HOFMANN                    - 3 -
AUGUST WILHELM GELMKE

10. Kraftfahrzeug nach einem der Ansprüche 1 bis 9, d a -
    d u r c h   g e k e n n z e i c h n e t , daß das
    Aufnahmeobjektiv (7) in den Fahrzeugrücklichtern (6)
    integriert angeordnet ist.

11. Kraftfahrzeug nach einem der Ansprüche 1 bis 10, d a -
    d u r c h   g e k e n n z e i c h n e t , daß das
    Lichtleiterbündel (14) und/oder die Linsen (15, 16)
    aus Kunststoff bestehen.

FIG. 1

FIG. 2

FIG. 3

0083769